# FASCICULE DE BREVET EUROPEEN

(11) **EP 2 469 095 B1**
(45) Date de publication et mention de la délivrance du brevet: **13.04.2016**
(21) Numéro de dépôt: 11194986.3
(22) Date de dépôt: 21.12.2011
(51) Int. Cl.: F04D 17/12, F04D 23/00, F04D 25/16, F04D 27/02, E04H 4/16

(54) **Dispositif de vidange soufflant et procédé de vidange par soufflage**
Abflussvorrichtung, und Abflussverfahren
Device for draining by blowing and method for draining by blowing

(30) Priorité: 23.12.2010 FR 1005106
(43) Date de publication de la demande: 27.06.2012
(73) Titulaire: Fontaine Piscines, 71170 Chauffailles (FR)
(72) Inventeur: Fontaine, Rémi, 71170 CHAUFFAILLES (FR)
(74) Mandataire: Oudin, Stéphane

(56) Documents cités:
- EP-A1- 0 301 132
- EP-A1- 0 308 846
- EP-A1- 1 746 287
- EP-A2- 1 466 551
- DE-A1- 10 134 138

## Description

### Domaine technique

La présente invention concerne un dispositif de vidange soufflant et un procédé de vidange par soufflage permettant notamment l'hivernage des piscines extérieures.

### Technique antérieure

Les piscines installées en extérieur doivent être hivernées avant l'arrivée du froid. En effet, lorsque les opérations d'hivernage ne sont pas réalisées, il y a des risques important que l'eau présente dans la canalisation gèle et endommage la canalisation. A l'arrivée des beaux jours, les canalisations endommagées sont souvent source de fuites d'eau plus ou moins importantes qui peuvent rendre la piscine inutilisable pendant des réparations qui deviennent vite coûteuses.

De manière courante, les travaux d'hivernage, en particulier la vidange des canalisations d'une piscine extérieure, sont réalisés au moyen d'un aspirateur. Pour réaliser la vidange de la canalisation, dans un premier temps, on baisse le niveau d'eau contenu dans la piscine afin qu'il soit situé en-dessous du niveau d'arrivée des bouches de refoulement de la canalisation de la piscine. On raccorde l'extrémité libre du tuyau de l'aspirateur à la canalisation de la piscine par l'intermédiaire d'une des bouches. Pour assurer l'efficacité de cette vidange, le raccord entre le tuyau de l'aspirateur et la bouche doit bien entendu être réalisé de manière la plus étanche possible. Ensuite, on aspire l'eau encore présente dans la canalisation au moyen de l'aspirateur. L'utilisation d'un tel aspirateur pour réaliser cette vidange, rend les opérations d'hivernage longues et pénibles. En effet, l'aspirateur doit être vidé fréquemment de l'eau qu'il a aspirée avant d'aspirer l'eau encore restante dans la canalisation. De plus, l'opérateur effectuant cette vidange, doit fréquemment s'agenouiller et s'allonger sur la plage de la piscine afin d'accéder à la bouche de la canalisation. Enfin, l'opérateur est exposé à des risques électriques importants liés à la présence d'eau dans l'aspirateur. Enfin, la bonde de fond de la piscine ainsi que la canalisation raccordant cette bonde de fond ne peuvent être vidangées car elles restent sous le niveau de l'eau.

En outre, la dépression maxi d'un aspirateur air/eau est classiquement de l'ordre de 180 à 210 mbar. Par conséquent, à partir d'une profondeur voisine de 2 mètres, l'aspirateur devient inefficace. Il subsiste alors de l'eau résiduelle dans les conduites sans que l'opérateur ne le sache, cela peut alors constituer une source de dommages ultérieurs. De plus, les performances des aspirateurs se dégradent très vite, perte d'étanchéité, prise d'air et oxydation des turbines due notamment aux vapeurs d'eau corrosives, chlorées ou encore salées.

On connait, notamment par les publications EP 1 036 603 et US 2005/150 526, des dispositifs de vidange soufflants utilisés pour la vidange de canalisation de maison. Ces dispositifs de vidange soufflants sont toutefois d'une construction complexe et ne permettent pas d'assurer la vidange efficace de la canalisation d'une piscine extérieure.

Afin de palier au manque de matériel performant et facile d'utilisation, certains possesseurs de piscines extérieurs font fonctionner les pompes de filtration d'eau 24 heures sur 24 pour assurer une circulation continue de l'eau dans la canalisation et ainsi éviter la formation de gel dans ladite canalisation. Sachant qu'en 2010 il y a plus d'un million de piscines en France, que l'augmentation en nombre de ces piscines est d'au moins 100 000 par an et que 10 à 20% des possesseurs de ces piscines font usage de la pompe de filtration pour éviter l'hivernage, les économies d'énergie et gains écologiques à réaliser sont notables.

### Exposé de l'invention

La présente invention vise à remédier à ces inconvénients en proposant un dispositif de vidange soufflant compact, simple à fabriquer et à utiliser par une personne seule et un procédé de vidange permettant à l'opérateur d'hiverner une piscine rapidement, simplement, sans inconfort particulier, en toute sécurité, notamment en assurant la vidange efficace de toute la canalisation et en permettant de visualiser le résultat.

L'invention concerne un dispositif de vidange soufflant, notamment pour la vidange de canalisation, remarquable en ce qu'il comporte au moins un premier générateur d'air, un second générateur d'air, des moyens de temporisation et au moins un tuyau de soufflage d'air surpressé généré par les premier et second générateur d'air, les premier et second générateurs d'air étant couplés l'un à l'autre en cascade afin d'augmenter la pression et le débit de sortie d'air du tuyau, le second générateur d'air étant raccordé aux moyens de temporisation agencés pour le faire démarrer après un laps de temps prédéterminé suivant le démarrage du premier générateur d'air et ainsi limiter l'intensité du courant électrique nécessaire au démarrage du dispositif de vidange soufflant. Le dispositif de vidange selon l'invention permet ainsi d'éviter une rupture d'alimentation électrique préjudiciable, en particulier si les coffrets de protection ne sont pas ou peu accessibles. Le dispositif de vidange soufflant selon l'invention est de plus compact, simple à fabriquer et il peut facilement être utilisé par un opérateur seul.

On comprend bien que le dispositif de vidange soufflant selon l'invention n'aspire que de l'air ambiant, il n'est donc pas exposé aux produits corrosifs utilisés en piscine, ce qui lui assure un niveau de performance stable dans le temps.

Selon un mode de réalisation préféré, le premier générateur d'air est de type à canal latéral et apte à créer une pression différentielle.

Les premier et second générateurs d'air ont avantageusement des puissances sensiblement équivalentes.

De manière avantageuse, le dispositif de vidange soufflant comporte une malle de transport contenant au moins les premier et second générateurs, la malle de transport étant pourvue de roues facilitant son déplacement au sol.

Le dispositif de vidange soufflant comporte de préférence des moyens de commande à distance agencés pour commander son démarrage à distance.

Le dispositif de vidange soufflant comporte de préférence au moins l'un des équipements suivants :
- un filtre à air prévu en amont du premier générateur'd'air et agencé pour filtrer l'air entrant dans le premier générateur d'air,
- un refroidisseur d'air prévu à la sortie du second générateur d'air et agencé pour refroidir l'air sortant du second générateur d'air,
- un clapet anti-retour agencé pour prévenir tout reflux dans le second générateur d'air,
- un clapet de sécurité apte, au-delà d'une pression prédéterminée, à créer une fuite pour le refroidissement des premier et second générateurs d'air.

L'invention concerne également un procédé de vidange par soufflage de la canalisation d'une piscine, remarquable en ce qu'il met en oeuvre le dispositif de vidange soufflant décrit précédemment sans nécessiter l'abaissement du niveau de l'eau en dessous des bouches d'accès des conduites d'eau de la canalisation de la piscine. Le procédé de vidange selon l'invention permet ainsi, à un opérateur seul, d'hiverner une piscine rapidement, simplement, sans inconfort particulier et en toute sécurité.

Selon un mode de mise en oeuvre préféré du procédé de vidange par soufflage, on réalise au moins les opérations suivantes :
- fermeture des vannes de vidange de la piscine,
- raccordement du dispositif de vidange soufflant à la canalisation à vidanger, branchement du dispositif de vidange soufflant à une alimentation électrique,
- mise en marche du dispositif de vidange soufflant avec démarrage successif des premier et second générateurs d'air par l'intermédiaire des moyens de temporisation, ouvertures et fermetures successives des vannes de vidange afin de distribuer l'air dans les conduites de la canalisation et de vidanger successivement chaque conduite,
- obturation des conduites pour bloquer une colonne d'air dans chaque conduite.

De manière avantageuse, avant l'opération de fermeture des vannes, on arrête l'alimentation électrique des pompes d'alimentation de la piscine.

Selon un mode de réalisation préféré, on verse dans la piscine un produit d'hivernage et on injecte de l'air surpressé dans la conduite de fond de la canalisation afin de provoquer le brassage et la répartition du produit d'hivernage dans l'eau restant dans la piscine.

### Description sommaire des dessins

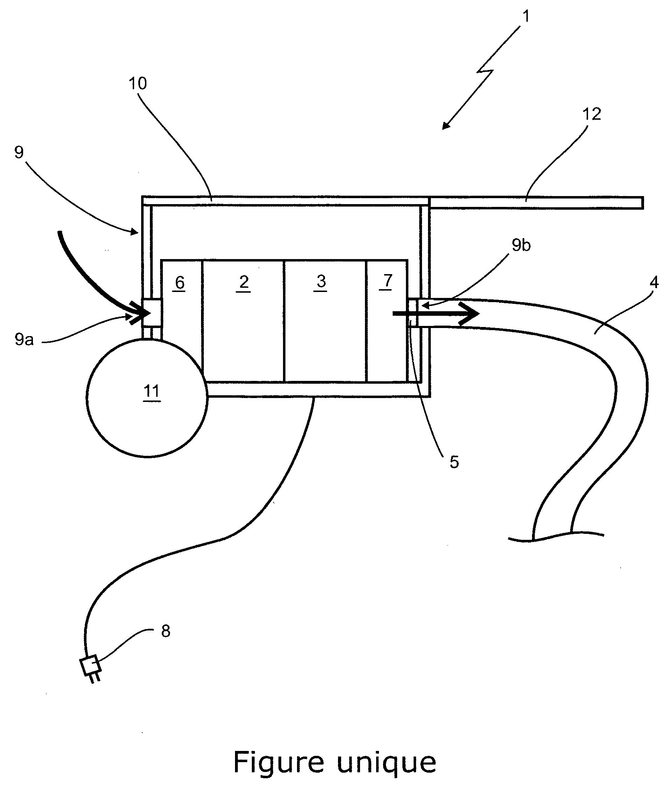

D'autres avantages et caractéristiques ressortiront mieux de la description qui va suivre d'un mode d'exécution du dispositif de vidange soufflant et du procédé de vidange par soufflage selon l'invention, en référence à la figure unique annexée qui représente schématiquement un dispositif de vidange soufflant selon l'invention.

### Meilleure manière de réaliser l'invention

La description qui suit est centrée sur un dispositif de vidange soufflant utilisé pour l'hivernage de piscine extérieure. Il est bien entendu évident que le dispositif de vidange soufflant peut être utilisé pour toute autre application adaptée.

En référence à la figure unique, le dispositif de vidange soufflant 1 selon l'invention comporte un premier et un second générateurs d'air 2, 3, couplés l'un à l'autre en cascade. Le premier générateur d'air 2 est par exemple un générateur à charbon ou sans entretien fonctionnant sous 220 volts et 50 Hertz, ayant une puissance d'environ 1500 Watts ayant un débit d'air à vide de 35 litres/seconde et générant une pression de 300 mbar lorsque les vannes de la canalisation sont obturées. Le second générateur d'air 3 est par exemple un générateur à canal latéral apte à générer une pression différentielle, fonctionnant sous 220 volts et 50 Hertz, ayant une puissance d'environ 1500 Watts et assurant une pression de 300 mbar lorsque les vannes (non représentées) de la canalisation d'alimentation en eau sont obturées. Le second générateur d'air 3 est ainsi suralimenté par le premier générateur d'air 2, les premier et second générateurs 2, 3 étant de puissances équivalentes. La disposition particulière des premier et second générateurs d'air 2, 3, ainsi couplés en cascade, permet d'augmenter la pression et le débit de sortie d'air du dispositif de vidange soufflant 1. Le premier générateur d'air 2 suralimente le second générateur d'air 3. Le dispositif de vidange soufflant 1 permet ainsi d'atteindre aisément une pression de 400 mbar et un débit de 150 m³/heure. Comme décrit ultérieurement, la pression générée par le dispositif de vidange soufflant 1 permet ainsi d'évacuer de manière efficace l'eau présente dans une canalisation tout en restant inférieure à la pression admissible par les systèmes de filtration de la piscine. Ainsi, en cas d'erreur de manipulation du dispositif de vidange soufflant 1, il n'y a aucun risque, ni pour l'utilisateur, ni pour l'installation. Par ailleurs, l'alimentation en 220 volts des premier et second générateurs d'air 2, 3 correspond à une alimentation électrique standard équipant la plupart des maisons individuelles. Ainsi, le dispositif de vidange soufflant 1 selon l'invention peut être utilisé sans installation électrique spécifique.

Le second générateur d'air 3 est raccordé à des moyens de temporisation, non représentée, agencée pour faire démarrer le second générateur d'air 3 après un lapse de temps prédéterminé suivant le démarrage du premier générateur d'air 2. Ce lapse de temps est par exemple de 10 secondes. Ainsi, lors du démarrage du dispositif de vidange soufflant 1, l'intensité nécessaire est limitée puisque, dans un premier temps, seul le premier générateur d'air 2 consomme de l'énergie. Cette temporisation permet donc de ne pas avoir au démarrage du dispositif de vidange soufflant 1 une consommation simultanée des premier et second générateurs d'air 2, 3.

Chacun des premier et second générateurs d'air 2, 3 peut être couplé à un disjoncteur (non représenté) et à un contacteur (non représenté) commandant sa mise en route. Les disjoncteurs et contacteurs peuvent être rassemblés dans un coffret de commande (non représenté).

Le second générateur d'air 3 est couplé à un tuyau 4, flexible, dont l'extrémité est pourvu de moyens de raccordement aptes à raccorder le dispositif de vidange soufflant 1 à une canalisation, par exemple celle d'une piscine extérieure. Le tuyau 4 peut être pourvu de moyens de raccordement rapide (non représentés) permettant son raccordement au second générateur d'air 3 et à la canalisation. Ces moyens de raccordement rapide sont connus de l'Homme du métier. Avant utilisation, le tuyau 4 peut se présenter non raccordé au second générateur d'air 3 pour limiter l'encombrement du dispositif de vidange soufflant 1 non utilisé. Un clapet anti-retour 5 est avantageusement prévu entre le second générateur d'air 3 et le tuyau 4. Ce clapet anti-retour 5 permet de prévenir tout reflux accidentel d'eau dans le second générateur d'air 3 pendant l'utilisation du dispositif de vidange soufflant 1. Le clapet anti-retour 5 est de préférence prévu à faible résistance pour obturer efficacement le passage de l'eau, au moindre reflux dans le tuyau 4. De plus, le dispositif de vidange soufflant 1 peut comporter un clapet de sécurité (non représenté), par exemple taré à 450 mbar, pression au-delà de laquelle il autorise une fuite d'air dans le circuit. Ce clapet de sécurité permet d'éviter le déclenchement des sécurités thermiques internes des premier et second générateurs d'air 2, 3, en créant une fuite pour leur refroidissement en cas de vanne fermée au niveau de la canalisation ou de débit d'air insuffisant.

Selon le mode de réalisation illustré, le dispositif de vidange soufflant 1 comporte un filtre à air 6, prévu en amont du premier générateur d'air 2 et permettant de filtrer l'air à l'entrée du dispositif de vidange soufflant 1. Ce filtre à air est de préférence à grand débit et raccordé à une prise d'air externe permettant l'aspiration de l'air. De plus, le dispositif de vidange soufflant 1 comporte au moins un refroidisseur d'air 7, prévu à la sortie du second générateur d'air 3, pour refroidir l'air sortant de la cascade des premier et second générateurs d'air 2, 3 et expulsé dans le tuyau 4. Le filtre à air 6 et le refroidisseur d'air 7 sont des équipements standards bien connus de l'Homme du métier. Ce refroidisseur d'air 7 est par exemple un échangeur air/air avec refroidissement par ventilateur. Le refroidisseur d'air 7 est particulièrement utile pour les dispositifs de vidange soufflant 1 à usage intensif.

Les premier et second générateurs d'air 2, 3, ainsi que notamment les moyens de temporisation, sont raccordés à un câble d'alimentation pourvu d'une prise électrique 8 de type 16 Ampères, 220 volts avec deux pôles et une terre ou de type 16 Ampères, 220 volts avec phase, neutre et une terre et permettant d'alimenter électriquement le dispositif de vidange soufflant 1 une fois la prise électrique 8 branchée à un circuit d'alimentation électrique (non représenté).

Les premier et second générateurs d'air 2, 3, le filtre à air 6 et le refroidisseur d'air 7 sont disposés dans une malle de transport 9 pourvue d'un couvercle 10 pouvant être ouvert pour autoriser l'accès aux équipements logés dans la malle de transport 9. La malle de transport 9 est pourvue de roues 11, de préférence de grand diamètre supérieur à 15 cm et d'une poignée 12 de préférence télescopique. Les roues 11 et la poignée 12 facilitent le déplacement de la malle de transport 9. La malle de transport 9 est pourvue d'au moins un premier et un second orifices 9a, 9b traversant sa paroi. Le premier orifice 9a est prévu avant le filtre à air 6 et le second orifice 9b après le second générateur d'air 3.

De manière optionnelle, le dispositif de vidange soufflant 1 peut-être couplé à un manomètre basse pression (non représenté) apte à mesurer les pressions situées entre 0 et 600 mbar. Ce manomètre basse pression est par exemple monté sur un piquage en Té.

Selon un autre mode de réalisation non représenté, le dispositif de vidange soufflant selon l'invention comporte un nombre de générateurs d'air supérieur. Selon encore un autre mode de réalisation non représenté, les générateurs d'air ont des puissances différentes. De même, selon un autre mode, le générateur à canal latéral à simple étage est remplacé par un générateur à canal latéral à double étage de même puissance et de même tension.

Selon encore un autre mode de réalisation non représenté, le dispositif de vidange soufflant selon l'invention comporte des moyens de commande à distance permettant de le démarrer à distance. Ces moyens de commande à distance peuvent être par exemple à touches ou à commande vocale. Ils facilitent l'utilisation pour une personne seule du dispositif de vidange soufflant. Ces moyens de commande à distance comportent par exemple une télécommande, un émetteur et un récepteur pourvu d'une antenne et sont aptes à commander la mise en route et l'arrêt du dispositif de vidange soufflant par le pilotage par exemple de deux contacteurs prévus respectivement sur le premier et sur le second générateur d'air. Ces moyens de commande à distance sont particulièrement indispensables si l'opérateur est seul. En effet, un opérateur seul peut sans se déplacer simultanément arrêter le dispositif soufflant et procéder au bouchonnage de l'extrémité des différentes conduites à la fin de leur vidange dès que la baisse de pression le permet et surtout avant que l'eau ne retourne dans la conduite.

La plupart des éléments formant le dispositif de vidange soufflant 1 sont schématisés sur la figure unique par l'intermédiaire de rectangles. Ces éléments peuvent bien entendu avoir toute autre forme adaptée. De même, les caractéristiques techniques des différents éléments peuvent être adaptées selon les besoins. Le poids total du dispositif de vidange soufflant 1 est modéré et peut facilement être inférieur à 40 kg.

Afin de vidanger par soufflage la canalisation (non représentée), par exemple pour l'hivernage d'une piscine, on utilise avantageusement le dispositif de vidange soufflant 1 qui permet de réaliser les opérations d'hivernage sans nécessiter l'abaissement du niveau de l'eau en dessous des bouches d'accès des conduites d'eau de la piscine.

Dans un premier temps, avant de procéder à la vidange de la canalisation, on arrête l'alimentation électrique des pompes d'alimentation (non représentées) de la piscine et on ferme les vannes de vidange vers les égouts de la canalisation de la piscine.

Dans un second temps, on raccorde l'extrémité libre du tuyau 4 flexible du dispositif de vidange soufflant 1 à la canalisation à vidanger et on raccorde électriquement le dispositif de vidange soufflant 1 à une alimentation électrique de 220 volts, 16 ampères. Le tuyau 4 est par exemple raccordé à un flexible (non représenté) fourni avec l'hiverneur prévu pour le raccordement à l'installation de la piscine. Ce raccordement peut être réalisé au moyen d'embout de type pompier dont le tuyau 4 peut être pourvu à chacune de ses extrémités. Ces embouts permettent de garantir l'étanchéité du raccordement. Le raccordement du dispositif de vidange soufflant 1 sur différents types de skimmers ou sur la prise balai pour les bassins à débordement peut également nécessiter des cannes d'injection (non représentées) de longueurs différentes et de réducteurs bien connus de l'Homme du métier. Toutefois, lesdites cannes d'injection sont des pièces spécifiques au dispositif de vidange soufflant 1 et n'existent pas dans le commerce, par conséquent leur fourniture est prévue avec ledit dispositif de vidange soufflant 1 pour un raccordement facile aux skimmers.

Pour recevoir les accessoires indispensables à l'utilisation du dispositif de vidange soufflant 1 à savoir un flexible, 2 cannes d'injection et une clé de serrage pour les raccords étanches de connexion, la malle de transport 9 est pourvue d'un logement dans sa partie supérieure.

Dans un troisième temps, on met en marche le dispositif de vidange soufflant 1. Le premier générateur d'air 2 démarre en premier, suivi, selon le réglage des moyens de temporisation, par le second générateur d'air 3. Toutefois, le lapse de temps entre les démarrages successifs peut être adapté selon les types des premier et second générateurs d'air 2, 3, car il convient de démarrer en premier le premier générateur d'air 2 qui présente le pic d'intensité le plus bas et d'adapter les moyens de temporisation pour faire démarrer le second générateur d'air 3 au bon moment afin de limiter au maximum l'intensité du courant électrique nécessaire au démarrage du dispositif de vidange soufflant 1. En effet, lors du démarrage du premier générateur d'air 2, le flux d'air généré (fonction du type du premier générateur d'air 2) entraine la rotation de la turbine du second générateur d'air 3 dont le démarrage est retardé. Ainsi, au moment du démarrage du second générateur d'air 3, le couple nécessaire (fonction du type dudit second générateur d'air 3) est réduit, ce qui a pour conséquence de réduire l'intensité au démarrage.

L'entrée et la sortie de l'air dans le dispositif de vidange soufflant 1 est symbolisé sur la figure unique par deux flèches. On ouvre et on ferme successivement les vannes de vidange de chaque conduite de la canalisation afin de distribuer l'air dans toutes les conduites de la canalisation, pour expulser l'eau présente et vidanger successivement chaque conduite. Une fois chaque conduite vidangée, on l'obture afin de former une colonne d'air bloquée dans chaque conduite. Cette colonne d'air permet de maintenir la canalisation hors gel et garantie ainsi la bonne tenue de la canalisation même en cas de gelée importante.

Lors de la vidange de la tuyauterie, l'air insufflé dans l'installation provoque un bouillonnement important dans l'eau présente dans la piscine et dans les filtres. On peut verser dans l'eau de la piscine un produit d'hivernage. Ainsi, lorsque l'on injecte de l'air surpressé dans la conduite de fond de la canalisation, ce bouillonnement génère un brassage énergique du produit d'hivernage et favorise sa répartition dans l'eau présente dans la piscine. En fonction des besoins, ce brassage peut être prolongé plus ou moins longtemps.

Par ailleurs, le bouillonnement important de l'eau présente dans les filtres permet un brassage rapide et efficace des charges filtrantes des filtres à sable sans démontage du filtre et sans risque de fuite et de casse lors du remontage de la cloche.

Après brassage et vidange du filtre de la piscine, on peut provoquer un effet de chasse d'air en mettant en pression le filtre puis en ouvrant une à une les différentes vannes.

Avec les équipements précédemment décrits de manière non limitative, le dispositif de vidange soufflant 1 a un débit d'air de sortie à vide de 35 litres par seconde et une pression de sortie de 500 mbar, vannes fermées et clapet de sécurité déconnecté. Lors des opérations de vidange pour l'hivernage, toute la puissance des premier et second générateurs d'air 2, 3, soit 3000 watts, est nécessaire pour éviter l'équilibre des pressions air/eau et conserver un débit d'air suffisant pour assurer le refroidissement simultané des premier et second générateurs d'air 2, 3 par l'air injecté. Le débit à 250 mbar est estimé à 30 litres par seconde pour une hauteur de 2 mètres.

Lors du procédé de vidange, l'efficacité de l'expulsion de l'eau est, au contraire des procédés par aspiration, facilement visible au moyen de l'air sortant de la canalisation.

L'opérateur n'a besoin d'accéder aux bouches d'accès à la canalisation d'eau qu'une seule fois pour les boucher. Dans le cas du procédé par aspiration, l'opérateur doit faire de nombreuses manipulations et doit notamment se baisser, s'agenouiller, s'allonger, se relever à plusieurs reprises pour vidanger son aspirateur et cela à chaque refoulement, à chaque skimmer, à la prise balai sans oublier l'égout et le circuit chauffage. A chaque point d'aspiration, l'opérateur doit repositionner l'aspirateur avec son tuyau et faire suivre l'alimentation électrique dudit aspirateur.

Par ailleurs, on comprend bien que le fait de souffler de l'air dans les canalisations pour les vidanger est beaucoup plus intéressant que d'aspirer l'eau contenue dans lesdites canalisations. Tout d'abord, on sait qu'un réseau de canalisation en général et qu'une installation de filtration piscine en particulier comprennent classiquement de nombreux joints toriques (raccords unions, vannes, pompes, filtre), joint de vanne multivoies, joint de purge, joint de cloche, garniture mécanique de pompe, etc. Tous ces points sont autant de prises d'air possibles. En effet, la vidange des canalisations pouvant s'effectuer par temps froid, eau comprise en général entre 5° et 12°C, les joints sont alors rétractés et les petites fuites d'eau sont très fréquentes et la vidange par aspiration sera difficilement réalisable.

En outre, dans le cas de l'hivernage d'une piscine, lorsque l'on vidange les canalisations par aspiration, on rejette l'eau contenue dans lesdites canalisations dans les égout créant ainsi un risque de pollution des rivières par rejet d'eau fortement chlorée ou contenant des algicides. De plus, l'eau de piscine aspirée passe au travers d'une pompe à vide risquant de dégrader rapidement des performances de ladite pompe par oxydation des turbines à cause des vapeurs corrosives, de l'eau contenant du sel et des oxydants (chlore, javel, acide, brome, ozone, peroxyde d'hydrogène ....

De plus, après vidange au moyen du dispositif de vidange soufflant 1, dans le cas d'une piscine sécurisée par un rideau flottant comportant des lames en PVC (polychlorure de vinyle), le niveau d'eau restant sensiblement constant à plus ou moins 2 cm, le rideau peut être refermé et la piscine sécurisée immédiatement après l'hivernage car ce dernier a pu se faire sans variation du niveau d'eau. Ceci n'est pas le cas lorsque la vidange est faite par aspiration puisque, préalablement à l'aspiration de l'eau présente dans la canalisation, le niveau d'eau dans la piscine doit être baissé au-dessous de celui des bouches d'accès à la canalisation.

De plus, le fait de ne quasiment pas abaisser le niveau d'eau dans la piscine permet d'éviter un endommagement du bassin. En effet, un bassin est plus vulnérable lorsque le niveau d'eau est baissé car une plus grande partie de son revêtement est soumis aux intempéries et notamment au gel.

Enfin, la mise en oeuvre du dispositif de vidange soufflant 1 permet de n'oublier aucun recoin de la canalisation. Ainsi, la canalisation de l'égout est vidangée sans oubli, ce qui n'est pas le cas avec la mise en oeuvre de dispositifs fonctionnant par aspiration.

### Possibilités d'application industrielle

Le dispositif de vidange soufflant selon l'invention est facile à fabriquer puisque basé sur du matériel simple. Il est de plus facile à utiliser, même par un opérateur isolé. Il permet de vidanger, en toute sécurité et efficacement, par exemple une canalisation de piscine afin de l'hiverner.

Le dispositif de vidange soufflant selon l'invention peut également être utilisé pour d'autres applications telles que, par exemple, pour la localisation de fuite dans une canalisation enterrée. En effet, du fait de la pression avec laquelle l'air est soufflé dans la canalisation, l'air qui s'échappe d'une fuite de la canalisation, traverse le sol et peut ainsi être détecté en surface. La détection de la fuite est ainsi largement facilitée.

De même, ledit dispositif de vidange soufflant peut aussi être utilisé pour l'entretien des filtres. En effet, le bouillonnement très intense crée par le dispositif de vidange soufflant à l'intérieur du filtre permet de décolmater plus efficacement le filtre qu'avec la pompe de filtration. Ainsi, pour cela, pendant cette opération, on laisse le dispositif de vidange soufflant en marche et la vanne égout ouverte, et on agit sur la vanne 6 voies pour injecter alternativement de l'air par le haut puis par le bas du filtre créant progressivement un bouillonnement à l'intérieur du filtre à mesure que l'eau et les impuretés s'évacuent à l'égout. Il est bien entendu que l'exemple décrit n'est qu'une illustration particulière en aucun cas limitative des domaines d'application de l'invention. L'Homme de l'Art pourra apporter des aménagements de taille, de forme et de matériau au dispositif de vidange soufflant et au procédé de vidange par soufflage sans pour autant sortir du cadre de la présente invention.

## Revendications

1. Dispositif de vidange soufflant (1), notamment pour la vidange de canalisation, **caractérisé en ce qu'**il comporte au moins un premier générateur d'air (2), un second générateur d'air (3), des moyens de temporisation et au moins un tuyau (4) de soufflage d'air surpressé générée par lesdits premier et second générateur d'air (2, 3), lesdits premier et second générateurs d'air (2, 3) étant couplés l'un à l'autre en cascade afin d'augmenter la pression et le débit de sortie d'air dudit tuyau (4), ledit second générateur d'air (3) étant raccordé auxdits moyens de temporisation agencés pour le faire démarrer après un lapse de temps prédéterminé suivant le démarrage dudit premier générateur d'air (2) et ainsi limiter l'intensité du courant électrique nécessaire au démarrage dudit dispositif de vidange soufflant (1).

2. Dispositif de vidange soufflant (1) selon la revendication précédente, **caractérisé en ce que** ledit second générateur d'air (3) est de type à canal latéral et apte à créer une pression différentielle.

3. Dispositif de vidange soufflant (1) selon l'une quelconque des revendications précédentes, **caractérisé en ce que** lesdits premier et second générateurs d'air (2, 3) ont des puissances sensiblement équivalentes.

4. Dispositif de vidange soufflant (1) selon l'une quelconque des revendications précédentes, **caractérisé en ce qu'**il comporte une malle de transport (9) contenant au moins lesdits premier et second générateurs (2, 3), ladite malle de transport (9) étant pourvue de roues (11) facilitant son déplacement au sol.

5. Dispositif de vidange soufflant (1) selon l'une quelconque des revendications précédentes, **caractérisé en ce qu'**il comporte des moyens de commande à distance agencés pour commander son démarrage à distance.

6. Dispositif de vidange soufflant (1) selon l'une quelconque des revendications précédentes, **caractérisé en ce qu'**il comporte au moins l'un des équipements suivants :
- un filtre à air (6) prévu en amont dudit premier générateur d'air (2) et agencé pour filtrer l'air entrant dans ledit premier générateur d'air (2),
- un refroidisseur d'air (7) prévu à la sortie dudit second générateur d'air (3) et agencé pour refroidir l'air sortant dudit second générateur d'air (3),
- un clapet anti-retour (5) agencé pour prévenir tout reflux dans ledit second générateur d'air (3),
- un clapet de sécurité apte, au-delà d'une pression prédéterminée, à créer une fuite pour le refroidissement desdits premier et second générateurs d'air (2, 3).

7. Procédé de vidange par soufflage de la canalisation d'une piscine, **caractérisé en ce qu'**il met en oeuvre le dispositif de vidange soufflant (1) selon l'une quelconque des revendications 1 à 6 sans nécessiter l'abaissement du niveau de l'eau en dessous des bouches d'accès des conduites d'eau de ladite canalisation de ladite piscine.

8. Procédé de vidange par soufflage selon la revendication précédente, **caractérisé en ce que** l'on réalise au moins les opérations suivantes :
- fermeture des vannes de vidange de ladite piscine,
- raccordement dudit dispositif de vidange soufflant (1) à la canalisation à vidanger, branchement dudit dispositif de vidange soufflant à une alimentation électrique,
- mise en marche dudit dispositif de vidange soufflant (1) avec démarrage successif des premier et second générateurs d'air (2, 3) par l'intermédiaire des moyens de temporisation, ouvertures et fermetures successives desdites vannes de vidange afin de distribuer l'air dans les conduites de ladite canalisation et de vidanger successivement chaque conduite,
- obturation des conduites pour bloquer une colonne d'air dans chaque conduite.

9. Procédé de vidange par soufflage selon la revendication 8, **caractérisé en ce qu'**avant ladite opération de fermeture des vannes, on arrête l'alimentation électrique des pompes d'alimentation de ladite piscine.

10. Procédé de vidange par soufflage selon l'une quelconque des revendications 7 à 9, **caractérisé en ce que** l'on verse dans ladite piscine un produit d'hivernage et **en ce que** l'on injecte de l'air surpressé dans la conduite de fond de ladite canalisation afin de provoquer le brassage et la répartition dudit produit d'hivernage dans l'eau restant dans ladite piscine.

## Patentansprüche

1. Gebläse-Ablassvorrichtung (1), vor allem zum Entleeren einer Rohrleitung, **dadurch gekennzeichnet, dass** sie zumindest einen ersten Luftgenerator (2), einen zweiten Luftgenerator (3), Verzögerungsmittel und zumindest ein Gebläserohr (4) für Überdruckluft umfasst, die vom besagten ersten und zweiten Luftgenerator (2, 3) erzeugt wird, wobei die besagten ersten und zweiten Luftgeneratoren (2, 3) miteinander in Reihe geschaltet sind, um den Druck und das Luftauslassvolumen am besagten Rohr (4) zu erhöhen, wobei der besagte zweite Luftgenerator (3) mit den besagten Verzögerungsmitteln verbunden ist, die angeordnet sind, um ihn nach einer vorbestimmten Zeitspanne nach dem Anlauf des besagten ersten Luftgenerators (2) anlaufen zu lassen, und somit die Stromstärke zu beschränken, die für das Anlaufen der besagten Gebläse-Ablassvorrichtung (1) benötigt wird.

2. Gebläse-Ablassvorrichtung (1) nach dem vorherigen Anspruch, **dadurch gekennzeichnet, dass** der besagte zweite Luftgenerator (3) vom Typ Seitenkanalverdichter ist und imstande ist, einen Differenzdruck zu erzeugen.

3. Gebläse-Ablassvorrichtung (1) nach irgendeinem der vorherigen Ansprüche, **dadurch gekennzeichnet, dass** die besagten ersten und zweiten Luftgeneratoren (2, 3) in etwa gleichwertige Leistungen aufweisen.

4. Gebläse-Ablassvorrichtung (1) nach irgendeinem der vorherigen Ansprüche, **dadurch gekennzeichnet, dass** sie einen Transportkoffer (9) umfasst, der zumindest die besagten ersten und zweiten Luftgeneratoren (2, 3) enthält, wobei der besagte Transportkoffer (9) mit Rädern (11) versehen ist, um dessen Fortbewegung auf dem Boden zu erleichtern.

5. Gebläse-Ablassvorrichtung (1) nach irgendeinem der vorherigen Ansprüche, **dadurch gekennzeichnet, dass** sie Fernsteuermittel umfasst, die angeordnet sind, um deren Anlauf aus der Ferne anzusteuern.

6. Gebläse-Ablassvorrichtung (1) nach irgendeinem der vorherigen Ansprüche, **dadurch gekennzeichnet, dass** sie zumindest eine der folgenden Ausrüstungen umfasst:
- einen Luftfilter (6), der stromaufwärts des besagten ersten Luftgenerators (2) vorgesehen und angeordnet ist, um die in den besagten ersten Luftgenerator (2) einströmende Luft zu filtern,
- einen Luftkühler (7), der am Ausgang des besagten zweiten Luftgenerators (3) vorgesehen und angeordnet ist, um die aus dem besagten zweiten Luftgenerator (3) austretende Luft zu kühlen,
- ein Rückschlagventil (5), das angeordnet ist, um den Rückfluss in den besagten zweiten Luftgenerator (3) zu verhindern,
- ein Sicherheitsventil, das imstande ist, über einen vorbestimmten Druck hinaus ein Leck zum Kühlen der besagten ersten und zweiten Luftgeneratoren (2, 3) zu erzeugen.

7. Verfahren zum Entleeren einer Rohrleitung eines Pools durch ein Gebläse, **dadurch gekennzeichnet, dass** es die Gebläse-Ablassvorrichtung (1) nach irgendeinem der Ansprüche 1 bis 6 anwendet, ohne dafür den Wasserspiegel unter die Zulauföffnungen der Wasserleitungen der besagten Rohrleitung des besagten Pools absenken zu müssen.

8. Verfahren zur Entleerung durch ein Gebläse nach dem vorherigen Anspruch, **dadurch gekennzeichnet, dass** man zumindest die folgenden Arbeitsschritte durchführt:
- Schließen der Ablassventile des besagten Pools,
- Anschließen der besagten Gebläse-Ablassvorrichtung (1) an die zu entleerende Rohrleitung, Anschließen der besagten Gebläse-Ablassvorrichtung an eine Stromversorgung,
- Einschalten der besagten Gebläse-Ablassvorrichtung (1) mit sukzessivem Anlaufen des ersten und zweiten Luftgenerators (2, 3) anhand der Verzögerungsmittel, sukzessives Öffnen und Schließen der besagten Ablassventile, um die Luft in den Leitungen der besagten Rohrleitung zu verteilen, und nacheinander jede Leitung zu entleeren,
- Verschließen der Leitungen zum Einsperren einer Luftsäule in jeder Leitung.

9. Verfahren zur Entleerung durch ein Gebläse nach Anspruch 8, **dadurch gekennzeichnet, dass** man vor dem besagten Arbeitsschritt des Schließens der Ventile die Stromversorgung der Speisepumpen des besagten Pools abschaltet.

10. Verfahren zur Entleerung durch ein Gebläse nach irgendeinem der Ansprüche 7 bis 9, **dadurch gekennzeichnet, dass** man ein Überwinterungsmittel in den besagten Pool gießt und dass man Druckluft in die Bodenleitung der besagten Rohrleitung einbläst, damit sich das besagte Überwinterungsmittel mit dem Wasser, das im besagten Pool verblieben ist, vermischt und sich darin verteilt.

## Claims

1. Device for draining by blowing (1), in particular for the draining of a pipeline, **characterised in that** it comprises at least one first air generator (2), a second air generator (3), timing means and at least one pipe (4) for blowing supercharged air generated by said first and second air generators (2, 3), said first and second air generators (2, 3) being coupled to one another in cascade in order to increase the pressure and the flow rate of the air outlet of said pipe (4), said second air generator (3) being connected to said timing means arranged to start it after a predetermined lapse of time following the start of said first air generator (2) and as such limit the intensity of the electric current required to start said device for draining by blowing (1).

2. Device for draining by blowing (1) as claimed in the preceding claim, **characterised in that** said second air generator (3) is of the lateral channel type and able to create a pressure differential.

3. Device for draining by blowing (1) as claimed in any preceding claim, **characterised in that** said first and second air generators (2, 3) have substantially equivalent power levels.

4. Device for draining by blowing (1) as claimed in any preceding claim, **characterised in that** it comprises a transport case (9) containing at least said first and second generators (2, 3), said transport case (9) being provided with wheels (11) facilitating its displacement on the ground.

5. Device for draining by blowing (1) as claimed in any preceding claim, **characterised in that** it comprises means of remote control arranged to control the starting of it remotely.

6. Device for draining by blowing (1) as claimed in any preceding claim, **characterised in that** it comprises at least one of the following pieces of equipment;
- an air filter (6) provided upstream of said first air generator (2) and arranged to filter the air entering into said first air generator (2),
- an air cooler (7) provided at the outlet of said second air generator (3) and arranged to cool the air exiting from said second air generator (3),
- a non-return valve (5) arranged to prevent any reflux in said second air generator (3),
- a safety valve able, beyond a predetermined pressure, to create a leak for the cooling of said first and second air generators (2, 3).

7. Method for the emptying by blowing of the pipeline of a pool, **characterised in that** it implements the device for draining by blowing (1) according to any of claims 1 to 6 without requiring the lowering of the level of the water below the access mouths of the water pipes of said pipeline of said pool.

8. Method of emptying by blowing as claimed in the preceding claim, **characterised in that** at least the following operations are carried out;
- closing of the draining valves of said pool,
- connecting of said device for draining by blowing (1) to the pipeline to be emptied, connecting of said device for draining by blowing to an electrical power supply,
- turning on of said device for draining by blowing (1) with a successive starting of the first and second air generators (2, 3) by the intermediary of timing means, successive openings and closings of said draining valves in order to distribute the air in the pipes of said pipeline and successively drain each pipe,
- sealing off the pipes in order to block a column of air in each pipe.

9. Method of emptying by blowing according to claim 8, **characterised in that** before said operation of closing the valves, the electrical power supply of the pumps for supplying said pool are shut off.

10. Method of emptying by blowing according to any of claims 7 to 9, **characterised in that** a wintering product is poured into said pool and **in that** supercharged air is injected into the bottom pipe of said pipeline in order to provoke the mixing and the distribution of said wintering product in the water remaining in said pool.
